# FASCICULE DE BREVET EUROPEEN

(11) **EP 2 185 373 B1**
(45) Date de publication et mention de la délivrance du brevet: **24.10.2012**
(21) Numéro de dépôt: 08829428.5
(22) Date de dépôt: 16.07.2008
(51) Int. Cl.: B60J 5/10, E05D 11/06

(54) **VEHICULE AUTOMOBILE COMPORTANT UNE STRUCTURE DE CARROSSERIE PERFECTIONNEE POUR LA MISE EN PLACE D'UN MECANISME D'ARRÊT DE PORTE.**
KRAFTFAHRZEUG MIT EINER VERBESSERTEN KAROSSERIESTRUKTUR ZUM ANBRINGEN EINES TÜRANSCHLAGMECHANISMUS
MOTOR VEHICLE COMPRISING AN IMPROVED BODYWORK STRUCTURE FOR FITTING A DOOR STOP MECHANISM

(30) Priorité: 06.09.2007 FR 0757369
(43) Date de publication de la demande: 19.05.2010
(73) Titulaire: Peugeot Citroën Automobiles SA, 78140 Vélizy-Villacoublay (FR)
(72) Inventeur: BOUCHY, Laurent, F-91590 Baulne (FR)
(74) Mandataire: Fernandez, Francis Lionel
(86) Numéro de dépôt international: PCT/FR2008/051331
(87) Numéro de publication internationale: WO 2009/030846

(56) Documents cités:
- DE-U1-202004 004 856
- US-A- 5 050 270
- US-B2- 6 460 222

## Description

La présente invention concerne un véhicule automobile comportant une structure de carrosserie perfectionnée pour la mise en place d'un mécanisme d'arrêt de porte battante pour porte arrière, qui permet un encombrement minimal du mécanisme d'arrêt de porte et n'affecte pas la capacité de chargement du véhicule.

Un mécanisme d'arrêt de porte est un mécanisme qui permet de définir la position maximale de l'ouverture d'une porte.

Dans un véhicule muni de portes battantes à l'arrière, la butée du mécanisme d'arrêt de porte, à l'extrémité de la tige du mécanisme, vient généralement se loger dans un espace interne aménagé dans la porte, ou bien dans le corps creux de la caisse appelé « pied arrière » lorsque les dimensions de ce dernier le permettent.

Dans le cas d'un petit véhicule utilitaire par exemple, la section du pied arrière est trop petite pour loger la tige.

Une première solution consiste à réduire les dimensions du mécanisme d'arrêt de porte. Une telle solution est connue de l'art antérieur pour une structure complète de charnière de porte de véhicule. Ainsi, selon le document US 6 460 222, on connaît une structure de charnière pour porte arrière de véhicule, qui comporte un premier élément et un second élément solidaire en rotation d'un panneau intérieur de la porte et d'un évidement de la caisse, chacun de ces éléments de charnière étant relié à un axe rotatif. Cette structure de charnière pour porte arrière comprend :
- un organe de guidage, configuré à la partie inférieure de la porte avec un orifice de couplage qui le traverse, de manière à permettre la fixation dudit premier élément de charnière par l'intermédiaire d'un boulon et d'un écrou, l'organe de guidage présentant, de plus, deux flancs latéraux, de droite et de gauche, qui sont formés chacun d'une pièce cintrée ayant une rainure de guidage,
- une bride avec un orifice de couplage à sa partie de fond et des flancs latéraux de droite et de gauche qui sont aussi des pièces cintrées, l'une des deux pièces étant pourvue d'un orifice de liaison,
- une première et une seconde tiges ayant les deux extrémités écartées vers l'extérieur pour être insérées dans ladite rainure de guidage de l'organe de guidage et l'orifice de liaison de la bride, les parties centrales desdites tiges étant réalisées en forme de « U »,
- un organe de liaison pour relier les parties centrales de la première et de la seconde tiges, et
- et un ressort de type barre de torsion destiné à être inséré à l'intérieur d'une extrémité de la seconde tige et à être monté entre les pièces cintrées et la bride.

Toutefois, une telle réduction des dimensions est recherchée dans cette structure de l'art antérieur dans le seul but de réduire le nombre d'étapes de fabrication et, en conséquence, le coût de fabrication de la structure.

Elle ne vise pas à permettre la mise en place d'un mécanisme d'arrêt de porte battante de véhicule dans le pied arrière de carrosserie dont il est fait mention précédemment.

Une autre solution connue consiste à ne pas faire pleinement usage des corps creux cités plus haut et de mettre tout ou partie du mécanisme d'arrêt de porte à l'extérieur de la carrosserie du véhicule, ce qui provoque leur intrusion à l'intérieur du coffre du véhicule. Cette solution présente l'inconvénient évident de réduire la capacité de chargement du véhicule.

Le but de la présente invention est de palier les inconvénients précités des solutions connues de l'art antérieur, en concevant un véhicule comportant une structure de carrosserie adaptée pour la mise en place d'un mécanisme d'arrêt de porte battante arrière, en particulier mais non exclusivement pour de petits véhicules automobiles utilitaires.

Un autre but de la présente invention est de fournir une telle nouvelle structure de carrosserie, qui permette de conserver une capacité optimale de chargement du véhicule.

C'est également un but de la présente invention de fournir une telle nouvelle structure de carrosserie, qui soit de conception simple, de fabrication aisée, robuste et économique.

Pour parvenir à ces buts, l'invention a pour objet une structure de carrosserie perfectionnée pour la mise en place d'un mécanisme d'arrêt de porte pour porte battante arrière de véhicule, notamment de véhicule automobile, comprenant un pied arrière et un mécanisme d'arrêt de porte qui comporte une tige fixée sur la porte, l'extrémité libre de la tige - ou butée - définissant par blocage sur le pied arrière du véhicule la position maximale d'ouverture de la porte. Une ouverture est aménagée dans le pied arrière pour le passage de la tige hors dudit pied arrière, de manière à permettre à la tige de déboucher dans un espace libre situé à l'avant dudit pied arrière et au dessus de la zone de passage de roue, ledit espace libre étant de dimensions suffisantes pour loger la partie de tige ne pouvant se loger dans le pied arrière lorsque la porte passe de la position ouverte à la position fermée.

Cet espace libre, dans lequel vient déboucher l'extrémité de la tige, prend la forme d'un corps creux délimité notamment par l'aile arrière ou côté d'habitacle, la doublure d'aile arrière et la paroi supérieure du passage de roue.

Selon un mode préféré de réalisation de l'invention, l'ouverture aménagée dans le pied de volet pour le passage de la tige du mécanisme d'arrêt de porte sert également d'ouverture pour le passage de l'air d'un système d'extraction d'air.

Il peut être prévu, de plus, un renfort d'arrêt de porte, en forme de plaque, monté sur la gouttière du pied arrière de carrosserie.

De préférence, la doublure d'aile est pourvue d'un orifice traversant pour l'extraction d'air, qui débouche dans ledit espace libre de la zone de passage de roue, et cet orifice traversant est, de préférence, pourvu de lamelles anti-retour.

Il est prévu, de préférence également, un orifice débouchant dans la zone inférieure du pied arrière.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, en vue frontale et en perspective, de manière schématique, le principe de la mise en place d'un mécanisme d'arrêt de porte pour une porte battante arrière de véhicule utilitaire, selon la présente invention,
- la figure 2 représente le principe de la figure 1, en vue arrière et en perspective, à partir de l'intérieur du véhicule,
- la figure 3 représente, en vue frontale et en perspective, de manière schématique, le mécanisme d'arrêt de porte lorsque la porte est en position ouverte,
- la figure 4 représente, en vue frontale et en perspective, de manière schématique, le mécanisme d'arrêt de porte lorsque la porte est en position fermée,
- la figure 5 représente, en vue de dessus, de manière schématique, la cinématique du mécanisme d'arrêt de porte des figures 3 et 4, et
- la figure 6 représente, en vue frontale et en perspective, de manière schématique, le principe de la mise en place d'un mécanisme d'arrêt de porte battante arrière sur un véhicule utilitaire, avec les éléments permettant l'extraction d'air du véhicule, selon un mode préféré de réalisation de la présente invention.

Dans ce qui suit, les termes positions "avant", "arrière", "inférieur" et "supérieur" correspondent aux orientations du véhicule dans lesquelles l'axe X est l'axe longitudinal du véhicule, l'axe Y est l'axe transversal et l'axe Z est l'axe vertical.

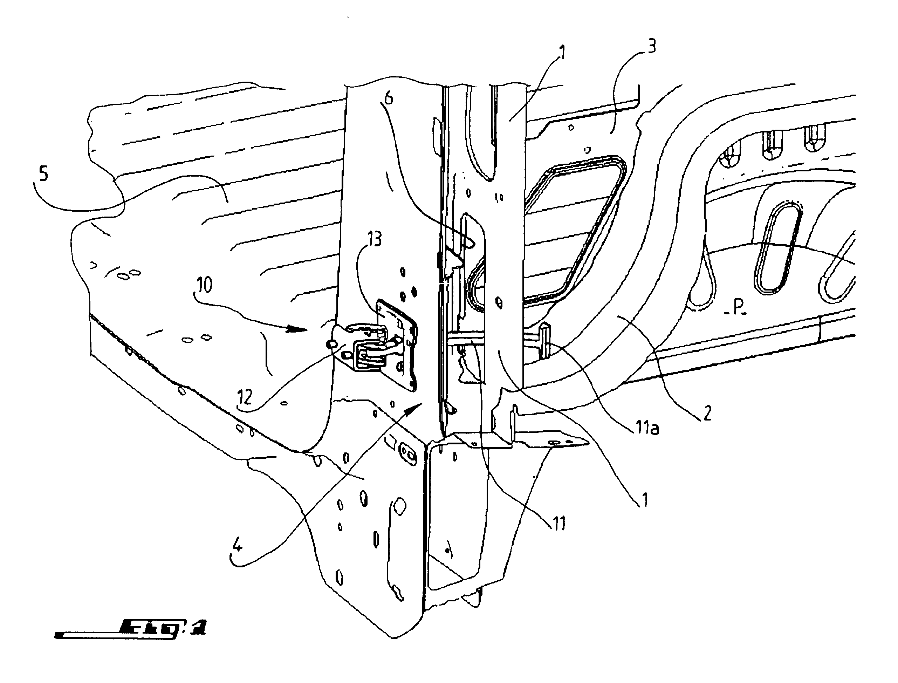

En référence aux figures 1 à 5, on a représenté, le principe de la mise en place d'un mécanisme d'arrêt de porte pour une porte battante arrière sur un véhicule, par exemple un véhicule de type utilitaire, selon la présente invention.

Seule est représenté le côté arrière droit du véhicule, il va de soi que le côté arrière gauche est réalisé de manière similaire.

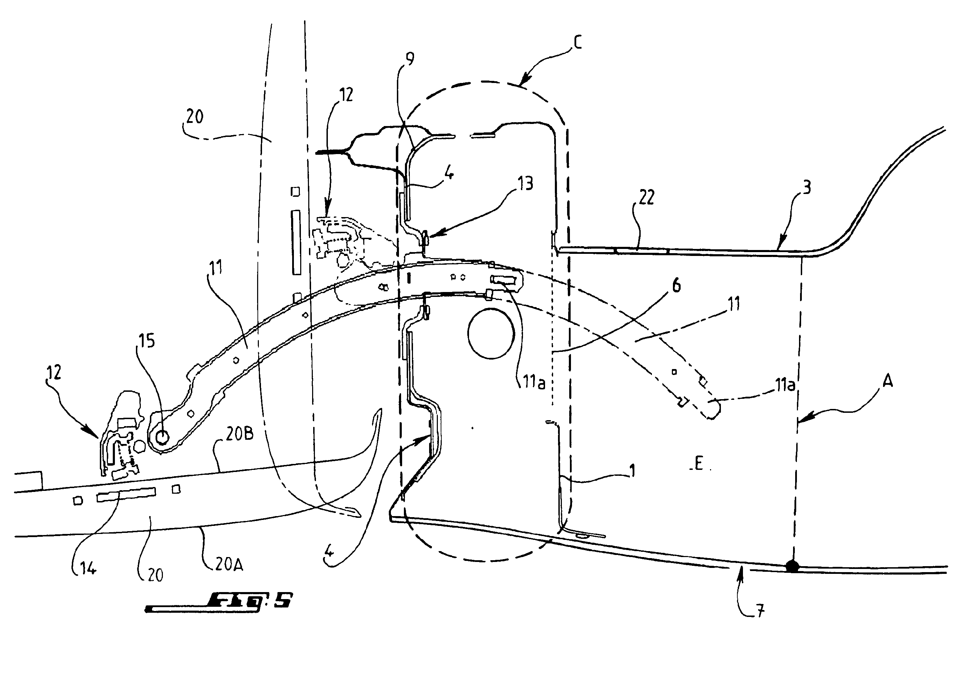

La porte arrière droite est articulée sur une structure d'encadrement arrière du véhicule, structure s'étendant verticalement et appelée pied arrière. Ce pied arrière qui participe à la rigidité de la caisse du véhicule est constitué par une structure creuse en tôle, de forme sensiblement parallélépipédique qui s'étend entre le plancher du véhicule et le pavillon, dans la zone arrière du véhicule. Ce pied arrière est principalement réalisé par l'assemblage de trois parois : une paroi 4 ou gouttière s'étendant à l'arrière du pied, une paroi 1 en équerre désignée « pied de volet » s'étendant à l'avant et sur le côté latéral dirigé vers l'intérieur du véhicule et la paroi 7 de l'aile arrière (encore susceptible d'être appelée côté d'habitacle) s'étendant sur le côté latéral dirigé vers l'extérieur du véhicule. Ces parois définissent un espace interne désigné C (figure 5).

Un deuxième espace interne ou corps creux, référencé E, est défini dans la structure de caisse du véhicule, à l'avant du pied arrière. Ce deuxième corps creux est délimité par notamment les parois suivantes : la doublure d'aile arrière 3 s'étendant sur le côté latéral dirigé vers l'intérieur du véhicule et l'aile arrière ou côté d'habitacle 7 du véhicule s'étendant sur le côté latéral dirigé vers l'extérieur, le pied de volet 1 s'étendant à l'arrière de cette zone E et en partie inférieure la paroi supérieure 2 de l'espace destiné au passage de la roue arrière. L'espace destiné au passage de la roue est référencé P.

Le mécanisme d'arrêt de porte, de référence générale 10, comprend une tige 11 et un palier de passage de la tige 11 fixé à la caisse du véhicule, désigné « platine dans le suite du texte, référencé 13, fixé sur la gouttière 4 du pied arrière de carrosserie. La platine 13 permet le passage et le guidage de la tige 11 à travers la caisse du véhicule ainsi que le blocage de sa partie d'extrémité en position maximale d'ouverture de la porte, comme exposé ci-dessous.

La tige 11 est fixée sur la porte battante arrière 20 par l'intermédiaire d'une articulation 15. La tige 11 est d'axe longitudinal sensiblement curviligne et elle comprend, d'une part, une tête 12, directement fixée sur la porte 20, et à son autre extrémité une butée 11a, de section supérieure à sa partie principale. La butée 11a a pour fonction de définir la position maximale d'ouverture de la porte 20 en venant se bloquer contre la platine 13, du fait de sa section supérieure à l'ouverture de passage de la tige 11 ménagée à travers ladite platine. La partie arrière de la zone de chargement du véhicule est représentée en 5.

La solution technique de la présente invention consiste, dans la mesure où la longueur de la tige est supérieure aux dimensions transversales du corps creux à permettre la traversée de ce dernier par la tige 11 et donc de lui donner issue hors dudit corps creux C dans l'espace interne du deuxième corps creux E défini précédemment. A cette fin, il est prévu une ouverture 6 adaptée faisant face à la platine 13 et qui traverse l'épaisseur du pied de volet 1 pour déboucher dans le corps creux E. Le corps creux E est situé au dessus de la zone de passage de roue P.

L'ouverture 6 pour le passage de la tige 11 peut, par ailleurs, formée une ouverture appropriée pour le passage de l'air du système d'extraction d'air. Cette disposition ne crée pas d'ouverture supplémentaire, et ne modifie donc pas la rigidité nécessaire de la caisse du véhicule.

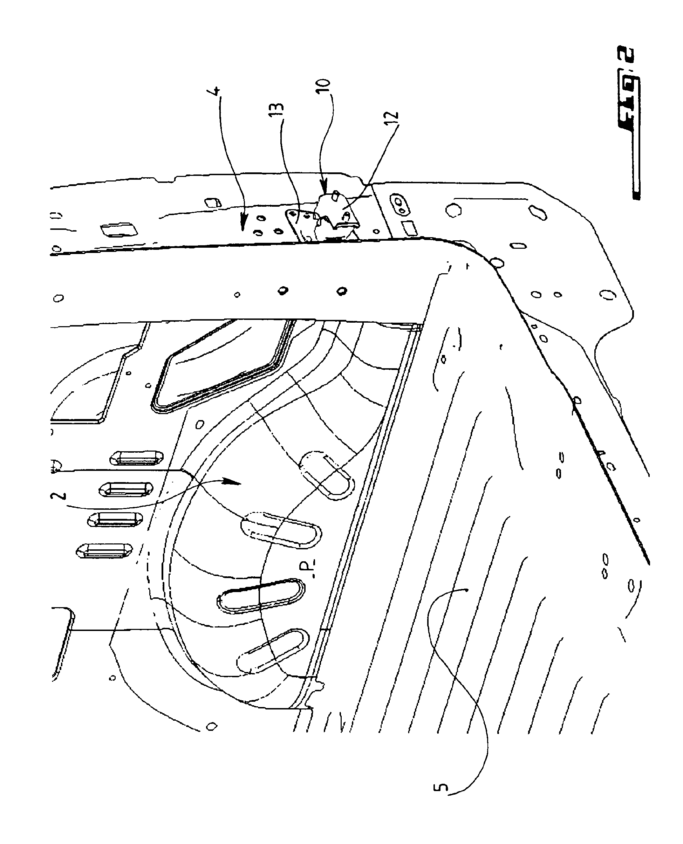

Comme on peut le voir sur la figure 2, le mécanisme d'arrêt de porte 10, tel que mis en place selon la solution exposée ci-dessus, ne modifie en rien le volume de la zone de chargement 5, puisqu'il se trouve être logé, pour ce qui est de la tige 11, dans la structure interne de la caisse du véhicule.

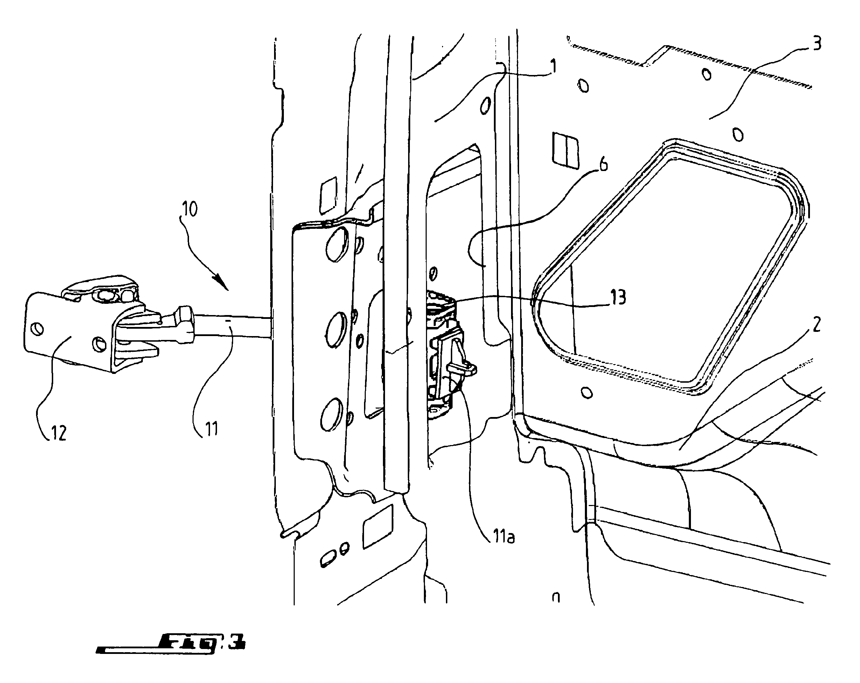

La figure 3 représente, en vue frontale et en perspective, de manière schématique, le mécanisme d'arrêt de porte 10 lorsque la porte 20 est en position maximale d'ouverture.

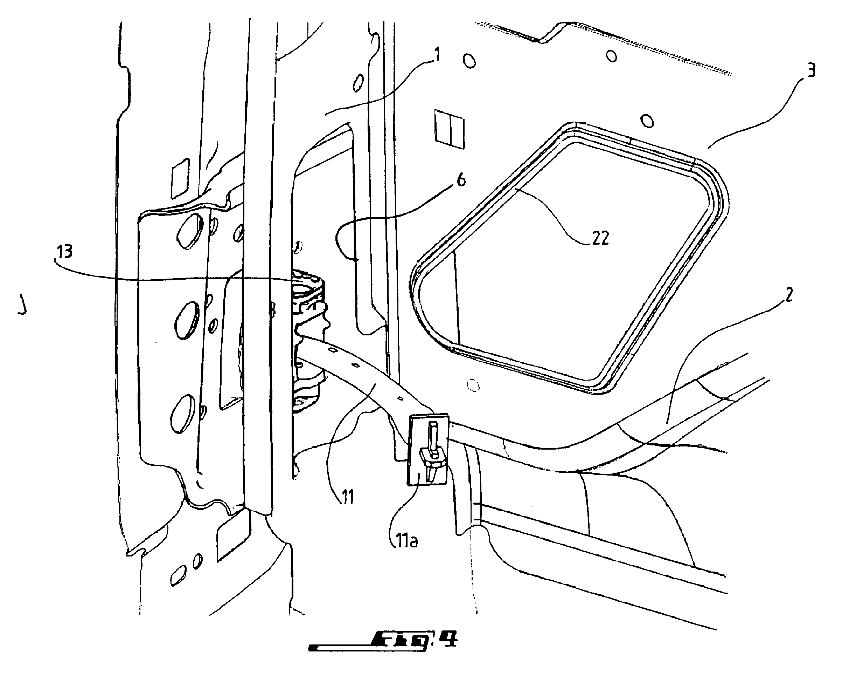

La figure 4 représente, en vue frontale et en perspective également, de manière schématique, le mécanisme d'arrêt de porte 10 lorsque la porte 20 est en position fermée. La butée d'extrémité 11a de la tige 11 et la tige 11 elle-même traversent l'ouverture 6 et se retrouvent dans le corps creux E entre l'aile arrière (non représentée) et la doublure d'aile arrière 3.

L'espace interne de ce corps creux E est de forme et de dimensions adaptées à permettre le libre déplacement et débattement de la tige 11 du mécanisme d'arrêt de porte, en particulier de sa partie d'extrémité formant butée 11a.

La figure 5 est une vue de dessus, en coupe, du mécanisme d'arrêt de porte des figures 1 à 4, qui montre la cinématique du mécanisme entre une position d'ouverture et une position de fermeture de la porte battante arrière 20.

La porte battante arrière 20 et le mécanisme d'arrêt 10 sont représentés en traits pleins dans la position d'ouverture de la porte 20 et en traits interrompus mixtes dans la position de fermeture de la porte 20.

La porte 20 est constituée, de manière classique, par une peau extérieure 20A et un renfort ou doublure de porte 20B.

Le mécanisme d'arrêt de porte 10 est fixé par sa tête 12 à la porte 20 par l'intermédiaire d'une semelle de fixation 14 à vis, par exemple.

La référence C représente l'espace du corps creux formé entre la gouttière 4 et le pied de volet 1, tandis que la référence E désigne l'espace du deuxième corps creux formé entre la doublure d'aile arrière (ou côté d'habitacle) 3 et l'aile arrière 7. La zone de passage de roue, située en dessous du corps creux E, débute sensiblement à partie de la ligne A (figure 5).

La référence 9 désigne un renfort d'arrêt de porte, en forme de plaque, pour la rigidité et la résistance mécanique de la structure de carrosserie au point de passage et de blocage du mécanisme d'arrêt 10, c'est-à-dire dans le plan de la platine 13.

L'ouverture 6 permettant à la tige 11 de traverser le pied arrière, permet, par ailleurs, d'être utilisé pour le système d'extraction d'air du véhicule. Ce système est nécessaire dans un véhicule pour éviter, lors de la fermeture d'une porte, une mise en pression de l'habitacle et de permettre à l'air de s'évacuer facilement. A cette fin, la doublure d'aile 3 est percée dans sa partie inférieure, d'un orifice traversant 22, de préférence muni de lamelles « anti-retour » et le pied arrière est percé d'un orifice 23 débouchant dans sa zone inférieure 24 faisant face à un bouclier arrière non figuré.

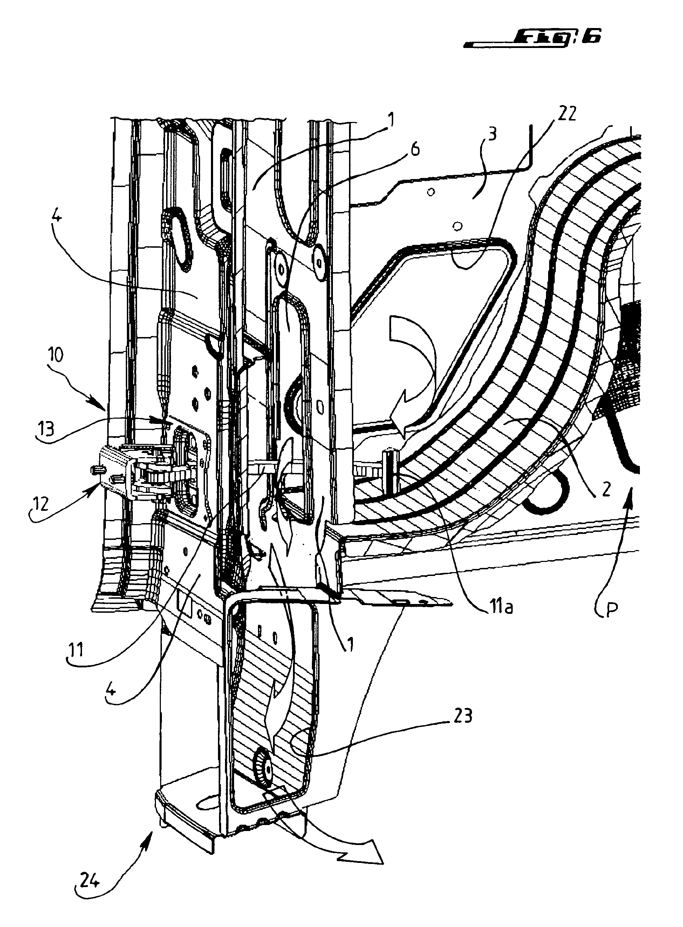

Les flèches de la figure 6 illustrent les mouvements de l'air extrait, grâce aux différents orifices et ouvertures mentionnés ci-dessus, en particulier ceux désignés par les références 6, 22 et 23.

La mise en place du mécanisme d'arrêt de porte sur la structure perfectionnée de la présente invention permet, sur un pied de volet relativement fin, de loger entièrement la tige du mécanisme d'arrêt de porte à l'intérieur de la caisse du véhicule, sans que la capacité de chargement du véhicule soit altérée. Grâce à la structure de la présente invention, ce même principe s'applique à tout type de véhicule, en particulier tout type de véhicule automobile, utilitaire ou non.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Véhicule, notamment automobile, comportant une structure de carrosserie perfectionnée pour la mise en place d'un mécanisme d'arrêt de porte (10) pour porte battante arrière (20), ladite structure comprenant un pied arrière et ladite porte (20) coopérant avec un mécanisme d'arrêt de porte (10) qui comporte une tige (11) fixée sur la porte dont l'extrémité libre (11a) - ou butée - définit par blocage sur le pied arrière la position maximale d'ouverture de la porte (20), **caractérisé en ce que** ladite structure présente une ouverture (6) ménagée dans le pied arrière pour le passage de la tige (11) hors dudit pied arrière, de manière à permettre à la tige (11) de pouvoir déboucher dans un espace libre (E) situé au dessus de la zone de passage de roue (P).

2. Véhicule selon la revendication 1, **caractérisé en ce que** ledit espace libre (E) prend la forme d'un corps creux délimité notamment par l'aile arrière (7), la doublure d'aile arrière (3) et la paroi supérieure (2) du passage de roue (P).

3. Véhicule selon l'une quelconque des revendications 1 et 2, **caractérisé en ce que** l'ouverture (6) aménagée dans le pied arrière pour le passage de la tige (11) du mécanisme d'arrêt de porte (10) sert également d'ouverture conçue pour le passage de l'air d'un système d'extraction d'air.

4. Véhicule selon l'une quelconque des revendications 1 à 3, **caractérisé en ce qu'**il est prévu, de plus, un renfort (9) d'arrêt de porte, en forme de plaque, monté sur le pied arrière (1) de carrosserie.

5. Véhicule selon l'une quelconque des revendications 1 à 4, **caractérisé en ce que** la doublure d'aile (3) est pourvue d'un orifice traversant (22) pour l'extraction d'air, qui débouche dans ledit espace libre de la zone de passage de roue (2).

6. Véhicule selon la revendication 5, **caractérisé en ce que** ledit orifice traversant (22) est pourvu de lamelles anti-retour.

7. Véhicule selon l'une quelconque des revendications 1 à 6, **caractérisé en ce qu'**il est prévu également un orifice débouchant (23) dans la zone inférieure (24) du pied arrière (1).

## Claims

1. A vehicle, in particular a motor vehicle, comprising an improved bodywork structure for fitting a door stop mechanism (10) for a pivoting rear door (20), the said structure including a rear post and the said door (20) collaborating with a door stop mechanism (10) which comprises a rod (11) attached to the door and of which the free end (11a) - or stop - by jamming against the rear post, defines the wide open position of the door (20), **characterized in that** the said structure has an opening (6) formed in the rear post so that the rod (11) can come out of the said rear post, so as to allow the rod (11) to be able to emerge into an empty space (E) located above the wheel arch region (P).

2. The vehicle according to Claim 1, **characterized in that** the said empty space (E) takes the form of a hollow body delimited in particular by the rear fender (7), the rear fender lining (3) and the upper wall (2) of the wheel arch (P).

3. The vehicle according to any one of Claims 1 and 2, **characterized in that** the opening (6) arranged in the rear post for the passage of the rod (11) of the door stop mechanism (10) also serves as an opening designed for the passage of air of an air extraction system.

4. The vehicle according to any one of Claims 1 to 3, **characterized in that** there is provided, in addition, a door stop reinforcement (9), in the form of a plate, mounted on the rear post (1) of the bodywork.

5. The vehicle according to any one of Claims 1 to 4, **characterized in that** the fender lining (3) is provided with a through-orifice (22) for the extraction of air, which emerges in the said empty space of the wheel arch region (2).

6. The vehicle according to Claim 5, **characterized in that** the said through-orifice (22) is provided with non-return lamellae.

7. The vehicle according to any one of Claims 1 to 6, **characterized in that** there is also provided an orifice (23) emerging in the lower region (24) of the rear post (1).

## Patentansprüche

1. Fahrzeug, insbesondere Kraftfahrzeug, das eine Karosseriestruktur aufweist, die für das Anbringen eines Türanschlagmechanismus (10) für Heckklappe (20) perfektioniert ist, wobei die Struktur einen hinteren Ständer aufweist und die Tür (20) mit einem Türanschlagmechanismus (10) zusammenwirkt, der einen Stab (11) aufweist, der auf der Tür befestigt ist, dessen freies Ende (11a) oder Anschlag durch Blockieren auf dem hinteren Ständer die maximale Öffnungsposition der Tür (20) definiert, **dadurch gekennzeichnet, dass** die Struktur eine Öffnung (6) aufweist, die in dem hinteren Ständer für das Durchgehen des Stabs (11) aus dem hinteren Ständer heraus eingerichtet ist, um es dem Stab (11) zu erlauben, in einen freien Raum (E), der sich oberhalb des Radlaufs (P) befindet, durchzugehen.

2. Fahrzeug nach Anspruch 1, **dadurch gekennzeichnet, dass** der freie Raum (E) die Form eines Hohlkörpers hat, der insbesondere von dem Heckflügel (7), der Auskleidung des Heckflügels (3) und der oberen Wand (2) des Radlaufs (P) abgegrenzt ist.

3. Fahrzeug nach einem der Ansprüche 1 und 2, **dadurch gekennzeichnet, dass** die in dem hinteren Ständer für das Durchgehen des Stabs (11) des Türanschlagmechanismus (10) eingerichtete Öffnung (6) auch als Öffnung dient, die für das Durchgehen der Luft eines Luftextraktionssystems konzipiert ist.

4. Fahrzeug nach einem der Ansprüche 1 bis 3, **dadurch gekennzeichnet, dass** ferner eine Türanschlagverstärkung (9) in Plattenform, die auf den hinteren Ständer (1) der Karosserie montiert ist, vorgesehen ist.

5. Fahrzeug nach einem der Ansprüche 1 bis 4, **dadurch gekennzeichnet, dass** die Flügelauskleidung (3) mit einer durchgehenden Öffnung (22) zur Extraktion von Luft, die in den freien Raum des Bereichs des Radlaufs (2) mündet, versehen ist.

6. Fahrzeug nach Anspruch 5, **dadurch gekennzeichnet, dass** die durchgehende Öffnung (22) mit Rückschlaglamellen versehen ist.

7. Fahrzeug nach einem der Ansprüche 1 bis 6, **dadurch gekennzeichnet, dass** es auch mit einer Öffnung (23), die in den unteren Bereich (24) des hinteren Ständers (1) durchgeht, versehen ist.
